# EUROPÄISCHE PATENTSCHRIFT

(11) **EP 1 517 080 B1**
(45) Veröffentlichungstag und Bekanntmachung des Hinweises auf die Patenterteilung: **16.04.2008**
(21) Anmeldenummer: 04021952.9
(22) Anmeldetag: 15.09.2004
(51) Int. Cl.: F21S 8/00, F21V 21/30, F21V 14/04, F16C 11/10

(54) **Leuchte**
Luminaire
Luminaire

(30) Priorität: 19.09.2003 DE 10343533
(43) Veröffentlichungstag der Anmeldung: 23.03.2005
(73) Patentinhaber: bulthaup GmbH & Co KG, 84155 Bodenkirchen (DE)
(72) Erfinder: Netsch, Volker, 84036 Landshut (DE); Tobehn, Andreas, 91227 Leinburg (DE)
(74) Vertreter: Herrmann, Uwe

(56) Entgegenhaltungen:
- EP-A- 1 477 725
- DE-A1- 19 917 283
- US-A- 2 740 885
- US-A- 4 204 274
- US-A- 5 803 585

## Beschreibung

Die vorliegende Erfindung betrifft eine Leuchte, insbesondere eine Küchenleuchte, mit einem feststehenden Basisteil, mit wenigstens einem mit dem Basisteil in Verbindung stehenden Profil, das schwenkbar an dem Basisteil befestigt ist, sowie mit wenigstens einem Leuchtmittel, das in oder an dem Basisteil oder in oder an dem Profil angeordnet ist.

Eine derartige Leuchte ist aus der US 2,740,885 bekannt. Diese Druckschrift offenbart eine Leuchte mit einem z. B. an einer Raumdecke montierbaren Basisteil, an dem ein oder zwei Gehäuse schwenkbar angeordnet sind, in denen sich die Leuchtmittel befinden.

Es sind ferner Küchenleuchten bekannt, die aus einem Gehäuse mit fest darin eingebauten Leuchtmitteln und weiteren Bauteilen, wie beispielsweise Vorschaltgeräten, Schaltern, Leuchtmittelhaltern, Kabeln, Reflektoren sowie Abdeckungen, bestehen. Das Gehäuse besteht üblicherweise aus Blech, Kunststoff oder Aluminiumprofilen. Diese Leuchten werden in der Küche fest positioniert. Üblicherweise kommen hierfür eine Wand, eine Nischenrückwand oder eine Fläche unterhalb von Borden und Oberschränken in Frage.

Bei derartigen Leuchten besteht ein Nachteil darin, dass der Strahlwinkel der Leuchte stets konstant ist, so dass der ausgeleuchtete Bereich nicht veränderbar ist. Ein weiterer Nachteil dieser Leuchten besteht darin, dass diese nicht blendfrei ausgeführt sind.

Es ist daher die Aufgabe der vorliegenden Erfindung eine Leuchte, insbesondere eine Küchenleuchte dahingehend weiterzubilden, dass der durch die Leuchte ausgeleuchtete Bereich veränderbar ist.

Diese Aufgabe wird durch eine Leuchte mit den Merkmalen des Patentanspruchs 1 gelöst. Danach weist die Leuchte ein feststehendes Basisteil sowie wenigstens ein mit dem Basisteil in Verbindung stehendes Profil auf, das schwenkbar an dem Basisteil befestigt ist. Ferner ist wenigstens ein Leuchtmittel vorgesehen, dass an oder in dem Basisteil oder an oder in dem Profil angeordnet ist. Das Profil ist in seinem Querschnitt dem einer Tragfläche eines Flugzeuges angenähert. Basisteil und Profil sind erfindungsgemäß derart ausgeführt, dass ihre Oberseiten miteinander fluchten. Aufgrund des gegenüber dem Basisteil schwenkbar ausgeführten Profils kann der Leuchtwinkel und somit auch der ausgeleuchtete Bereich verändert werden. Bei entsprechender Ausführung des Profils ist darüber hinaus der Vorteil erzielbar, dass die Leuchte blendfrei arbeitet.

Das Profil der erfindungsgemäßen Leuchte ist neben optischen Aspekten nach dem Gesichtspunkt der Lichtreflexion konzipiert, so dass die Arbeitsfläche optimal ausgeleuchtet werden kann. Es ist möglich, diffuses Licht aus direkter und indirekter Beleuchtung zur Verfügung zu stellen. Ein wesentlicher Vorteil der Leuchte besteht darin, dass das Licht auf der Arbeitsfläche je nach Tätigkeit bzw. Arbeitsplattentiefe durch Schwenken des Profils veränderbar ist. So lässt sich beispielsweise durch Zurückschwenken des Profils ein angenehmes Stimmungslicht erzeugen, indem beispielsweise nur eine Nischenrückwand angestrahlt wird. Während des Arbeitens auf der Arbeitsfläche kann das Profil entsprechend verschwenkt werden, um den Arbeitsbereich optimal auszuleuchten.

In weiterer Ausgestaltung der Erfindung ist vorgesehen, dass das Basisteil langgestreckt ist und sich das Profil in Längsrichtung des Basisteils erstreckt. Dabei ist Vorteilhafterweise vorgesehen, dass das Basisteil und das Profil im wesentlichen dieselbe Länge aufweisen.

Die Schwenkachse des Profils verläuft in bevorzugter Ausgestaltung der Erfindung in Längsrichtung des Basisteils.

Weiterhin kann vorgesehen sein, dass das Basisteil an seiner zu dem Profil gewandten Seite konkav ausgeführt ist und dass das Profil an seiner zu dem Basisteil gewandten Seite konvex ausgeführt ist, wobei die konvexe Seite des Profils in den konkaven Bereich des Basisteils eingreift. Auf diese Weise wird ein besonders ansprechender optischer Eindruck der Leuchte erreicht. Dies gilt insbesondere dann, wenn der Abstand zwischen Profil und Basisteil gering ist, beispielsweise im Bereich von wenigen Millimetern oder auch darunter liegt.

Ein besonders ansprechender optischer Gesamteindruck ergibt sich erfindungsgemäß dadurch, dass die Oberseite des Basisteils sowie die Oberseite des Profils im wesentlichen miteinander fluchten. In vorteilhafter Ausgestaltung der Erfindung gilt dies unabhängig vom Schwenkwinkel des Profils.

Gemäß der vorliegenden Erfindung ist vorgesehen, dass das Profil in seinem Querschnitt dem einer Tragfläche eines Flugzeugs entspricht.

In weiterer Ausgestaltung der vorliegenden Erfindung ist vorgesehen, dass das Profil gegenüber dem Basisteil stufenlos verstellbar ist oder in Vorzugsstellungen arretierbar ist. Im letzten Fall kann vorgesehen sein, dass ein Rastelement vorgesehen ist, das auf seiner Oberseite Einwölbungen oder Einkerbungen aufweist, und dass ein Rastvorsprung vorgesehen ist, der in die Einwölbungen oder Einkerbungen eingreift.

Dabei kann vorgesehen sein, dass das Rastelement und/oder der Rastvorsprung elastisch ausgeführt sind. Als geeignetes Material kommt beispielsweise elastischer Kunststoff in Frage. Auch beliebige andere Materialien sind einsetzbar. Denkbar ist beispielsweise, den Rastvorsprung als federndes Element vorzusehen, wobei dieser z.B. aus Kunststoff oder aus Metall bestehen kann.

Besonders vorteilhaft ist es, wenn der Rastvorsprung an einem Endbereich des Profils angeordnet ist oder durch diesen gebildet wird. Beispielsweise kann der Rastvorsprung durch den in Querrichtung des Profils zu dem Basisteil gewandten Endbereich des Profils gebildet werden. Der Rastvorsprung kann in diesem Fall beispielsweise mit einem Rastelement zusammenwirken, das aus elastischem Kunststoff oder einem sonstigen elastischen Material ausgeführt ist und fest in dem Basisteil angeordnet ist.

Selbstverständlich ist es ebenso denkbar, dass nicht das Rastelement, sondern der Rastvorsprung elastisch ausgeführt ist.

Vorteilhaft ist es, wenn das Rastelement austauschbar ist, so dass je nach Bedarf unterschiedliche Schwenkwinkel als Vorzugspositionen eingestellt werden können.

In bevorzugter Ausgestaltung der vorliegenden Erfindung ist vorgesehen, dass das Profil eine Lagerbuchse aufweist, die gegenüber einem Lager des Basisteils drehbar ist. Dabei kann vorgesehen sein, dass das Lager durch eine Stiftschraube oder einen Zapfen gebildet wird, die/der verdrehfest an dem Basisteil angeordnet ist. Die Lagerbuchse läuft entsprechend einem Gleitlager auf dem verdrehfest angeordneten Lager und ermöglicht auf diese Weise die schwenkbare Ausführung des Profils.

In weiterer Ausgestaltung der vorliegenden Erfindung ist vorgesehen, dass die elektrischen Bauteile der Leuchte, beispielsweise ein Vorschaltgerät, in dem Basisteil angeordnet sind. Auch beliebige andere elektrische Bauteile können in dem Basisteil angeordnet sein. Dies gilt beispielsweise für Steckdosen, Lichtschalter sowie für Sensoren für die Fernsteuerung und Dimmgeräte oder Anschlüsse für BUS-Systeme.

Gemäß einer bevorzugten Ausgestaltung der Erfindung ist ein Befestigungsprofil vorgesehen, mit dem das Basisteil verbindbar ist. Auf diese Weise ist die Leuchte sehr einfach montierbar. Sie wird auf einem Befestigungsprofil beispielsweise aufgeklippst oder aufgeschraubt. Auch andere Befestigungsmöglichkeiten sind denkbar. Das Befestigungsprofil kann beispielsweise an einer Wand oder Nischenwand oder an einem Bord oder an oder in einem Schrank montiert sein. Die Verwendung eines Befestigungsprofils ermöglicht auch eine einfache Elektroinstallation der Leuchte. Das Befestigungsprofil kann als flache Schiene ausgeführt sein, die Ausnehmungen und/oder Vorsprünge aufweist, in die Vorsprünge und/oder Ausnehmungen des Profils einfügbar sind.

Ist das Basisteil als Hohlkörper ausgeführt, ergibt sich eine besonders einfache Elektroinstallation der Leuchte.

Das Basisteil wird auf einer Seite durch das Befestigungsprofil abgedeckt und kann in den Seitenbereichen ebenfalls über Abdeckungen verfügen.

Weiterhin kann vorgesehen sein, dass das Profil auf seiner Innenseite wenigstens teilweise hochglanzpoliert ist, so dass diese Fläche die Aufgabe eines Reflektors übernimmt, ohne dass ein zusätzliches Bauteil benötigt wird.

In weiterer Ausgestaltung der Erfindung ist vorgesehen, dass das Profil eine transparente Abdeckung aufweist, die den die Leuchte aufnehmenden Bereich überdeckt und als Berührschutz dient. Hierfür kommt beispielsweise eine Acrylabdekkung in Frage. Die Abdeckung verhindert den Kontakt zu den heißen Leuchtmitteln und ermöglicht durch eine einfach Klippstechnik den unproblematischen Lampenwechsel.

Das Basisteil kann als Gehäuse ausführt sein.

Weitere Einzelheiten und Vorteile der Erfindung werden an Hand eines in der Zeichnung dargestellten Ausführungsbeispiels erläutert. Es zeigen:
- Figuren 1 - 10:: Querschnittsansichten von erfindungsgemäßen Leuchten mit an dem Profil angeordneten Leuchtmitteln,
- Figuren 11 - 17:: Querschnittsansichten von erfindungsgemäßen Leuchten mit an dem als Gehäuse ausgeführten Basisteil angeordneten Leuchtmitteln,
- Figur 18:: eine perspektivische Darstellung der erfindungsgemäßen Leuchte und
- Figuren 19 - 32:: schematische Darstellungen unterschiedlicher Anordnungsmöglichkeiten der erfindungsgemäßen Leuchte.

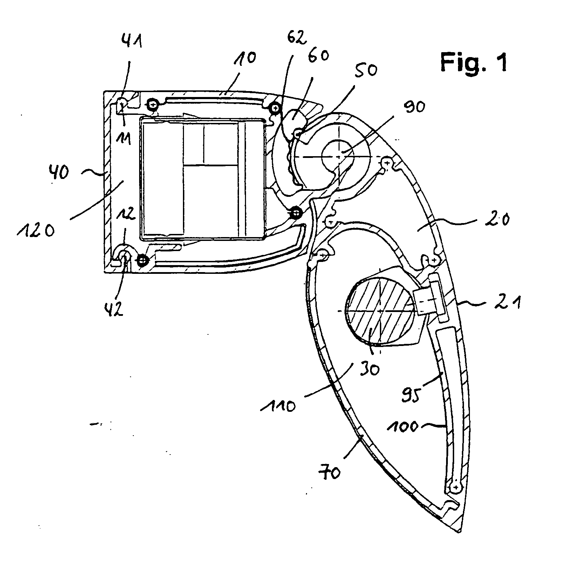

Figur 1 zeigt eine Querschnittsansicht der erfindungsgemäßen Leuchte mit einer fest an einer Wand oder Nischenwand montierten Befestigungsplatte 40, die im Querschnitt U-förmig ausgeführt ist und in ihrem oberen Schenkel eine Ausnehmung 41 und in ihrem unteren Schenkel einen Vorsprung 42 aufweist. Des weiteren ist ein als Basisteil dienendes Gehäuse 10 vorgesehen, das in seinem von dem Flügelprofil 20 abgewandten Endbereich einen Vorsprung 11 im oberen Bereich und eine Ausnehmung 12 im unteren Bereich aufweist, mittels derer das Gehäuse 10 in das Befestigungsprofil 40 einsteckbar ist. Auch eine Schraubverbindung oder jede beliebige andere geeignete Verbindung ist möglich. Das Gehäuse 10 ist als langgestrecktes im wesentlichen hohl ausgeführtes Bauteil ausgeführt. In dem Gehäuse 10 befinden sich die Elektronikkomponenten der Leuchte wie beispielsweise das elektronische Vorschaltgerät, das wie auch die anderen Elektronikkomponenten in das Gehäuse 10 vorzugsweise eingeklebt sind.

In dem von der Befestigungsplatte 40 abgewandten Bereich weist das Gehäuse 10 ein Rastelement 60 auf, das aus elastischem Kunststoff besteht. Das Rastelement 60 ist teilkreisförmig ausgeführt und weist eine konkave Oberfläche auf, die mit Ausnehmungen 62 versehen ist. Das Rastelement 60 ist in eine entsprechende Ausnehmung des Gehäuses 10 eingesetzt.

Das Gehäuse 10 weist ferner den Lagerzapfen 90 auf, der als Lager für das Flügelprofil 20 dient.

Das Flügelprofil 20 weist in seinem Querschnitt eine Form auf, die der Querschnittsansicht einer Tragfläche eines Flugzeugs ähnelt. Auf seiner Außenseite 21 weist das Flügelprofil eine leicht gekrümmte Oberfläche auf, die in etwa mit der Oberseite des Gehäuses 10 fluchtet, so dass sich ein harmonischer Übergang zwischen Gehäuse 10 und Flügelprofil 20 ergibt.

Das Flügelprofil 20 weist eine Wandung 95 mit einer hochglanzpolierten Oberfläche 100 auf, auf der das von dem Leuchtmittel 30 ausgehende Licht reflektiert wird.

Des weiteren ist eine Acrylabdeckung 70 vorgesehen, die den Kontakt zu dem hei-ßen Leuchtmittel 30 verhindert. Diese ist durch eine einfache Klippstechnik ansteckbar und ermöglicht einen unproblematischen Lampenwechsel.

Wie aus Figur 1 ersichtlich, weist das Flügelprofil 20 in seiner Querschnittsansicht ein spitz zulaufendes Ende auf. An dem von diesem Endbereich beabstandeten Endbereich ist ein Rastvorsprung 50 vorgesehen, der integraler Bestandteil des Flügelprofils 20 ist. Der Rastvorsprung 50 ist in die unterschiedlichen Ausnehmungen 62 des Rastelements 60 einführbar, so dass sich bevorzugte Schwenkpositionen des Flügelprofils 20 gegenüber dem Gehäuse 10 ergeben. Im vorliegenden Beispiel ergeben sich vier Rastpositionen, die durch einen Schwenkwinkel von 15° beabstandet sind.

Auf dem Lagerzapfen 90 läuft eine Buchse des Flügelprofils 20.

Die Befestigungsplatte 40, das Flügelprofil 20 sowie das Gehäuse 10 können aus eloxiertem Aluminium hergestellt sein.

Die Abdeckung 70 besteht aus Transparentem Acrylglas und weist eine Demontagehilfe/Positionierhilfe (Griffnase) für die einfache Demontage bei Lampenwechsel auf.

Sowohl das Flügelprofil 20 als auch das Gehäuse 10 sind durch in den Endbereichen aufsteckbare Abdeckkappen 110, 120 verschließbar. Dabei ist die Abdeckung 110 des Flügelprofils 20 vorzugsweise aus einem transparenten Material, beispielsweise aus Polycarbonat ausgeführt. Die Abdeckkappen 110, 120 können aber auch aus jedem beliebigen anderen Material bestehen, z. B. Aluminium, opakem Kunststoff etc. Die Abdeckung 120 des Gehäuses 10 ist vorzugsweise aus nicht transparentem Material, beispielsweise aus aluminiumgrauen Kunststoff ausgeführt.

Es kann vorgesehen sein, dass ein oder mehrere Rastelemente vorgesehen sind, was insbesondere von der Leuchtenlänge abhängt.

Ferner kann vorgesehen sein, dass der Rastvorsprung auf der Lagerbuchse angeordnet ist oder deren Bestandteil bildet.

Neben der dargestellten Arretierungsmöglichkeit mittels Rastelement und Rastvorsprung kann die erfindungsgemäßen Leuchte grundsätzlich auch mit einem Federelement mit Gleitlagerbuchse, mit einem Reibelement mit Gleitlagerbuchse oder auch mit einem Motorantrieb (z. B. 12V Motor) oder auch über ein Zahnrad angetrieben bzw. verschwenkbar sein.

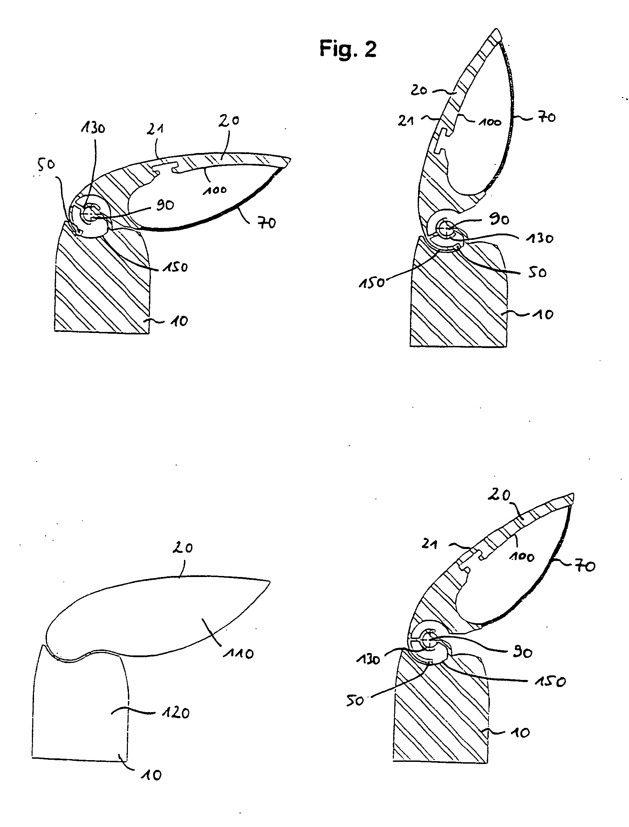

Figur 2 zeigt eine weitere Ausführungsform der erfindungsgemäßen Leuchte. Als wesentlicher Unterscheid zu dem in Figur 1 dargestellten Ausführungsbeispiel ergibt sich, dass der Rastvorsprung 50 hier nicht in Ausnehmungen eines Rastelements läuft, sondern als Reibelement ausgeführt ist, das auf einer entsprechenden Gegenfläche 150 des Gehäuses 10 läuft und der Schwenkbewegung des Flügelprofils 20 einen Widerstand entgegensetzt. Hierzu ist der Rastvorsprung 50 als Federelement ausgeführt, das eine permanente Kraft auf die teilkreisförmige Lauffläche 150 des Gehäuses 10 ausübt.

Figur 2 zeigt das Flügelprofil 20 in unterschiedlichen Schwenkwinkeln.

Aus Figur 2 geht ferner hervor, dass an dem Flügelprofil 20 eine Gleitlagerbuchse 130 vorgesehen ist, die drehbar auf dem Lagerzapfen 90 läuft.

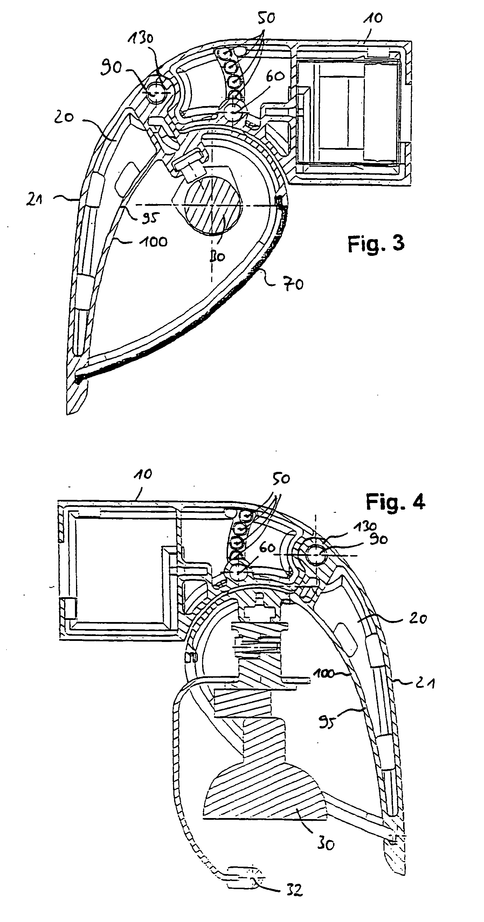

Figur 3 zeigt eine weitere Ausführungsform der erfindungsgemäßen Leuchte. Auch bei dieser Ausführungsform befindet sich das Leuchtmittel 30 an dem Flügelprofil 20. Das Flügelprofil 20 mit Acrylabdeckung 70 ist auf seiner Unterseite bei diesem Ausführungsbeispiel stärker ausbauchend ausgeführt. Die Acrylglasabdeckung 70 ist abnehmbar ausgeführt. Auch bei diesem Ausführungsbeispiel ist ein eine Ausnehmung aufweisendes Rastelement 60 vorgesehen, das an dem Gehäuse 10 angeordnet ist. Gegenüber dem Rastelement 60 verschwenkbar angeordnet sind die Rastvorsprünge 50, die in das Rastelement 60 eingreifen, wobei aufgrund der Mehrzahl der Rastvorsprünge 50 unterschiedliche Schwenkwinkel realisierbar sind.

Abweichend davon ist es ebenso möglich, dass das Rastelement seinerseits als Vorsprung ausgeführt ist und in entsprechende Rastausnehmungen eingreift, die mit dem Flügelprofil 20 in Verbindung stehen.

Wie aus Figur 3 und Figur 4 ersichtlich, sind die Rastvorsprünge/-ausnehmungen 50 auf einer gekrümmten Leiste angeordnet, die mit dem Flügelprofil 20 in Verbindung steht und im eingeschwenkten Zustand des Flügelprofils in das Gehäuse 10 hineinragt.

Figur 4 unterscheidet sich von Figur 3 im wesentlichen dadurch, dass als Leuchtmittel keine Leuchtstoffröhre sondern ein oder mehrere Halogenspots verwendet werden. In diesem Fall ist keine Abdeckung, sondern ein Berührschutz 32 vorgesehen.

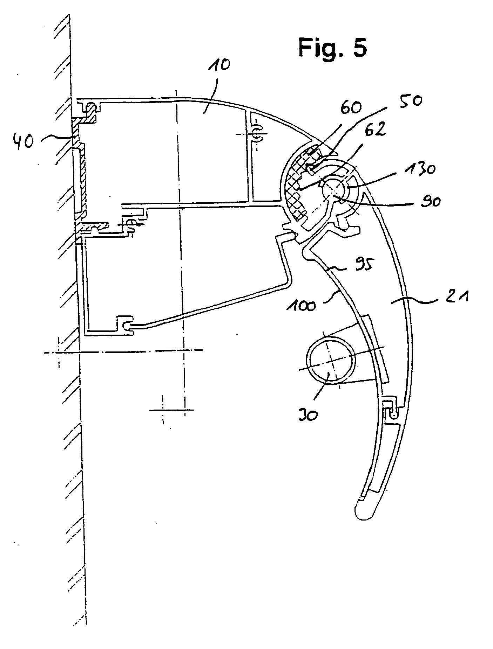

Figur 5 zeigt eine Querschnittsansicht einer Ausführungsform der Leuchte mit an dem Gehäuse 10 angeordnetem Rastelement 60 und im Endbereich des Flügelprofils 20 angeordnetem Rastvorsprung 50. Das Leuchtmittel 30 ist bei dieser Ausführungsform ebenfalls an dem Flügelprofil angeordnet, jedoch ohne Verwendung einer Abdeckung. Das Gehäuse 10 ist auf das Befestigungsprofil 40 aufgesteckt.

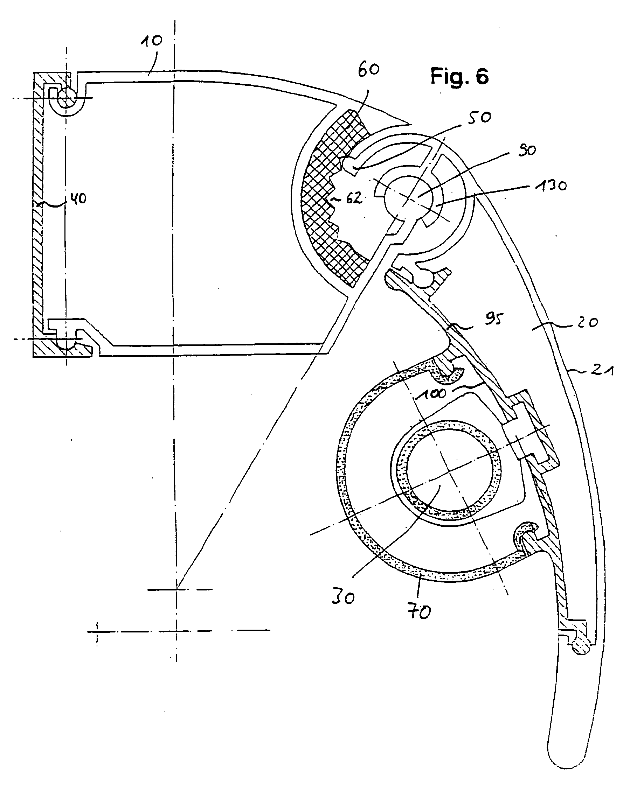

Figur 6 zeigt ein Ausführungsbeispiel, bei dem das Leuchtmittel 30 durch eine halbkreisförmige Acrylabdeckung 70 abgedeckt ist. Die Acrylabdeckung 70 weist in ihren Endbereichen Ausnehmungen auf, in die Vorsprünge auf der Innenseite des Flügelprofils 20 eingreifen. Der die Leuchte haltende Bereich ist ebenfalls von dem Profil 20 lösbar ausgeführt.

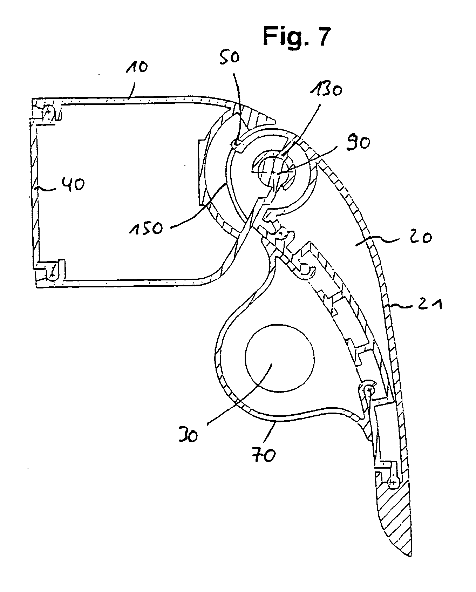

Aus Figur 7 ergibt sich eine weitere Ausführungsform der erfindungsgemäßen Leuchte. Hier ist kein Ausnehmungen aufweisendes Rastelement vorgesehen, sondern eine Gleitfläche 150, auf der der federnd ausgeführt Rastvorsprung 50 läuft und eine Kraft auf die Gleitfläche 150 ausübt. Auf diese Weise ist das Flügelprofil 20 in unterschiedlichen Positionen stufenlos arretierbar bzw. verstellbar.

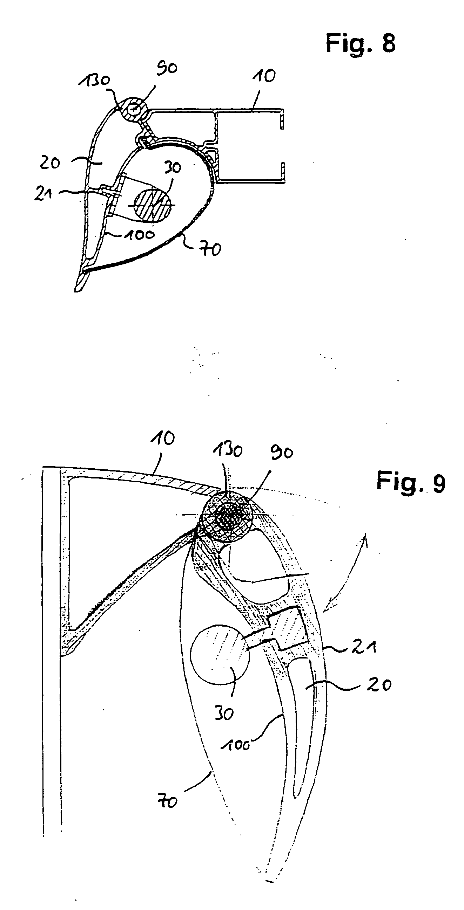

Figur 8 zeigt eine Ausführungsform der erfindungsgemäßen Leuchte mit stark ausbauchender Abdeckung 70. Der Lagerzapfen 90 auf dem das Flügelprofil 20 drehbar gelagert ist, steht wie aus Figur 8 ersichtlich über das Gehäuse 10 über.

Figur 9 zeigt schließlich eine Querschnittsdarstellung der erfindungsgemäßen Leuchte mit einem im wesentlichen dreieckigen Gehäuse 10, in dessen Eckbereich der Lagerzapfen 90 zur schwenkbaren Aufnahme des Flügelprofils 20 angeordnet ist.

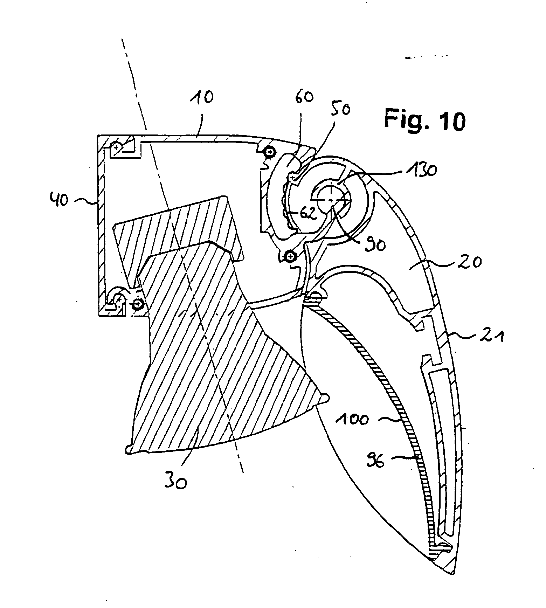

Aus Figur 10 ergibt sich eine weitere Ausgestaltung der vorliegenden Erfindung. Diese unterscheidet sich von den zuvor dargestellten Ausführungsformen dadurch, dass das Leuchtmittel 30 an dem Gehäuse 10 und nicht an dem Flügelprofil 20 angeordnet ist. In diesem Fall hat das Flügelprofil 20 im wesentlichen die Aufgabe, diffuses Licht zu erzeugen, das blendfrei ist und reguliert werden kann.

Das Flügelprofil 20 ist über den Rastvorsprung 50 und das Rastelement 60 in Stufen verstellbar. Es weist auf seiner Innenseite die polierte Oberfläche 100 auf, die zur Reflexion des von dem Leuchtmittel 30 ausgehenden Lichts dient. Die polierte Oberfläche 100 befindet sich auf einer Wandung 96, die lösbar mit dem Profil 20 in Verbindung steht. Wie ein Vergleich der Figuren 1 und 10 ergibt, kann die Wandung 96, die als Reflektor wirkt, an denselben Befestigungspunkten arretiert werden, wie die Acrylabdeckung 70, so dass das Flügelprofil 20 für Fälle einsetzbar ist, bei denen das Leuchtmittel 30 an dem Profil 20 oder an dem Gehäuse 10 angeordnet ist.

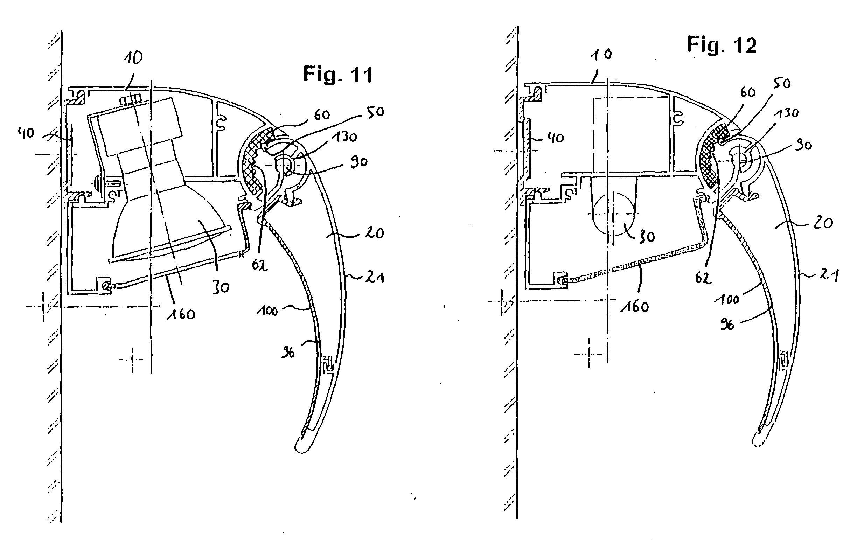

Figur 11 zeigt eine weitere Ausführungsform, bei der das Leuchtmittel 30 in dem Gehäuse 10 angeordnet ist. Des weiteren ist eine Abdeckung 160 vorgesehen, durch die der Kontakt mit dem Leuchtmittel 30 verhindert wird. Das Flügelprofil 20 ist in diesem Fall verhältnismäßig einfach aufgebaut. Es weist die gekrümmte Außenoberfläche 21 sowie eine gekrümmte hochglanzpolierte Innenseite 100 auf, die sich auf der Wandung 96 befindet und die als Reflektor dient. Wie ein Vergleich der Figuren 5 und 11 zeigt, kann die Wandung 96 durch eine Halterung für die Leuchte 30 ersetzt werden. Dazu ist vorgesehen, dass die Wandung 96 bzw. die Halterung lösbar mit dem Flügelprofil 20 in Verbindung steht.

Figur 12 zeigt die Leuchte gemäß Figur 11 mit einer Leuchtstoffröhre als Leuchtmittel 30.

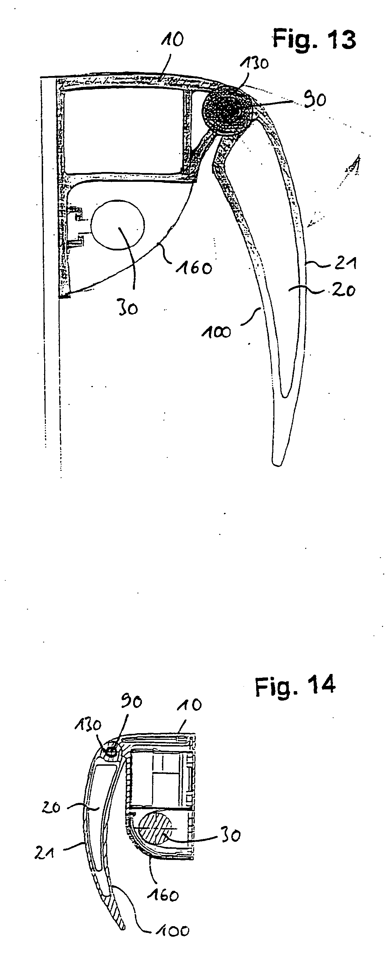

Aus Figur 13 ergibt sich eine Ausführungsform, bei der das Leuchtmittel 30 an dem Bereich des Gehäuses 10 befestigt ist, der sich im wesentlichen parallel zu der Wand bzw. zu einer Befestigungsplatte erstreckt. Auch bei dieser Ausführungsform schützt eine Abdeckung 160 vor Berührungen des Leuchtmittels 30. Das Flügelprofil 20 ist hier als spitz zulaufender auf seiner Innenseite und Außenseite gekrümmter Flügel ausgeführt, der zur Reflexion des abgegebenen Lichtes dient.

In Figur 14 ist eine Ausführungsform ersichtlich, bei der ebenfalls das Leuchtmittel 30 hinter einer Abdeckung 160 an dem Gehäuse 10 angeordnet ist, wobei sich das Gehäuse 10 in seiner Form geringfügig von dem gemäß Fig. 13 unterscheidet.

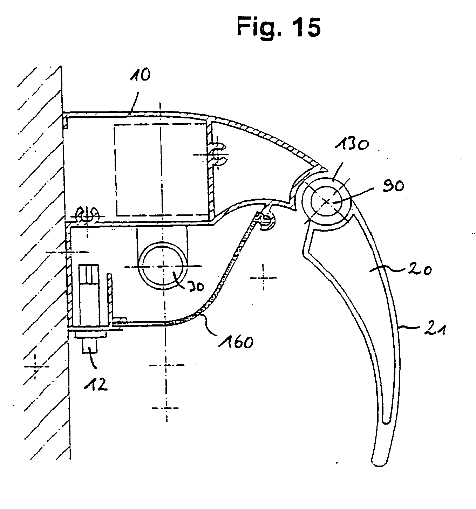

Figur 15 zeigt eine Ausführungsform mit einem in Richtung des Flügelprofils 20 vorgezogenem Gehäuse 10 und ebenfalls vorgezogener Abdeckung 160. Aus Fig. 15 ist ferner der unten am Gehäuse 10 angeordnete Schalter 12 erkennbar.

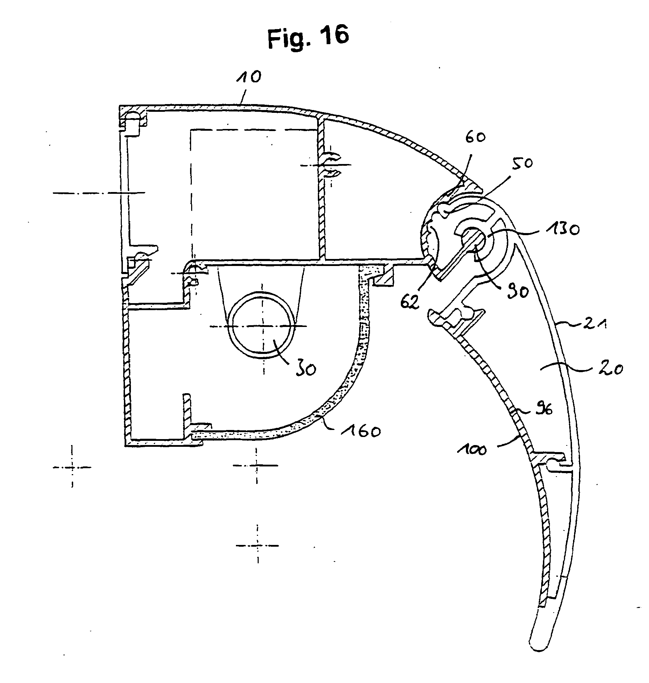

Figur 16 zeigt ebenfalls eine Ausführungsform mit vorgezogenem Gehäuse 10, in dem das Leuchtmittel 30 hinter der Abdeckung 160 angeordnet ist. Ferner dargestellt ist das Rastelement 60 mit den darin angeordneten Ausnehmungen 62 sowie der Rastvorsprung 50. Abweichend von der Ausführungsform gemäß Fig. 1 wird das Rastelement 60 nicht durch ein mit dem Gehäuse 10 zu verbindendes Kunststoffteil gebildet, sondern durch die dem Flügelprofil 20 zugewandte konkave Seite des Gehäuses 10. In dieser befinden sich Ausnehmungen 62, in die der Rastvorsprung 50 eingreift. Um eine Relativbewegung zwischen Rastvorsprung 50 und Rastelement 60 zu ermöglichen, die für eine Verstellung des Flügelprofils 20 erforderlich ist, ist der Rastvorsprung 50 oder der angrenzende, diesen tragende Endbereich des Profils 20 elastisch bzw. federnd ausgeführt. Des weiteren ergibt sich aus dieser Darstellung die Gleitlagerbuchse 130 des Flügelprofils 20 sowie der Lagerzapfen 90, der Bestandteil des Gehäuses 10 ist. Die Bezugsziffer 96 kennzeichnet die durch eine Klippverbindung einfügbare Wandung, die die Innenwandung des Flügelprofils 20 bildet und auf ihrer Außenseite hochglanzpoliert ist.

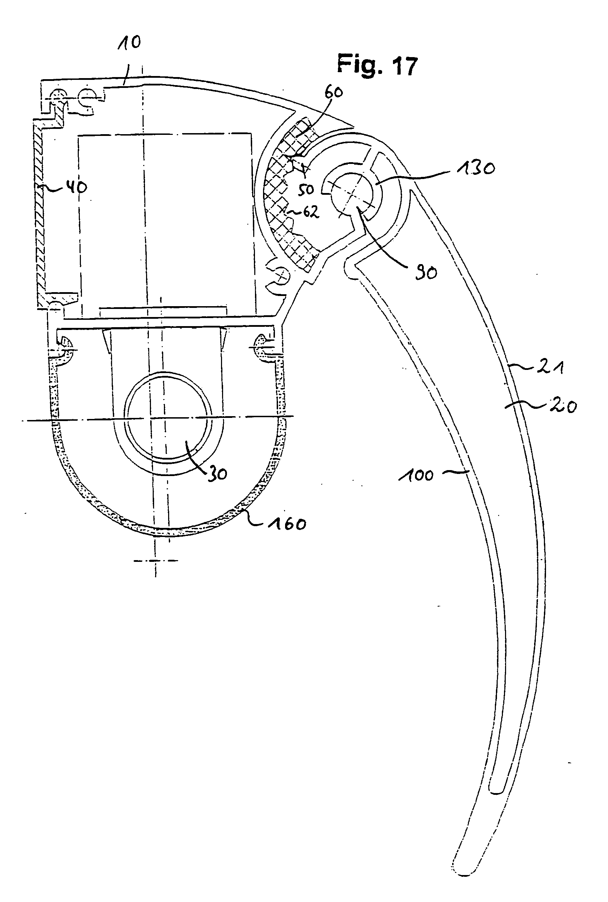

Aus Figur 17 ergibt sich eine weitere Ausführungsform, bei der das Leuchtmittel 30 im Gehäuse 10 angeordnet ist und eine im wesentlichen halbkreisförmige Abdekkung 160 aufweist. Das Rastelement 60 ist schraffiert dargestellt und wird durch ein teilkreisförmiges elastisches Kunststoffteil gebildet, das in eine entsprechende Ausnehmung des Gehäuses 10 eingesetzt ist.

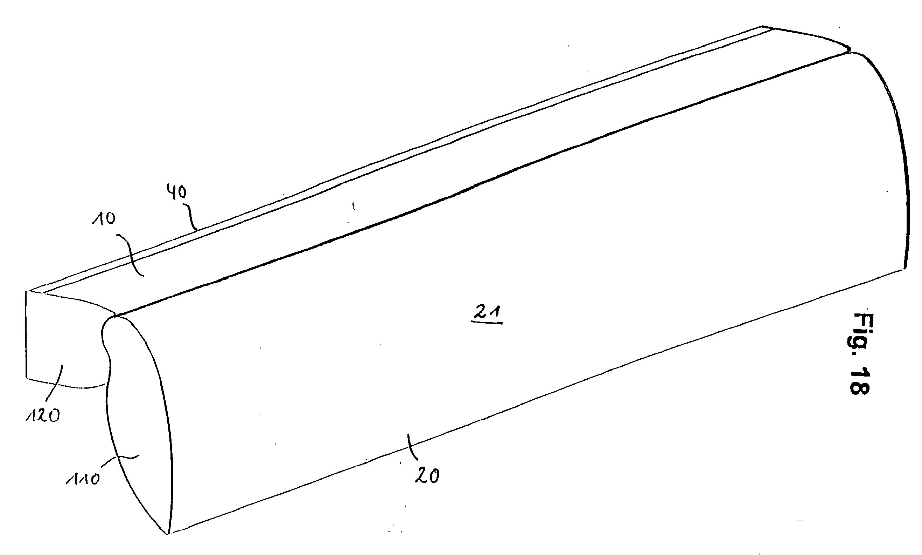

Figur 18 zeigt eine perspektivische Darstellung der erfindungsgemäßen Leuchte und verdeutlicht, dass in bevorzugter Ausgestaltung der Erfindung das Gehäuse 10 als langgestrecktes Bauteil ausgeführt ist. Dieses weist auf seiner zu dem Flügelprofil 20 gerichteten Seite eine konkave Oberfläche auf, in die ein konvexer Endbereich des Flügelprofils 20 eingreift. Das Gehäuse 10 sowie das Flügelprofil 20 weisen etwa die gleich Länge auf. In bevorzugter Ausgestaltung der Erfindung ist vorgesehen, dass das Gehäuse 10 sowie das Flügelprofil 20 im wesentlichen unabhängig von der Schwenkposition des Flügelprofils 20 miteinander fluchtende Oberflächen aufweisen, wie dies aus Figur 18 hervorgeht. In dem zu einer Wand gerichteten Endbereich erkennt man das Befestigungsprofil 40, das eine leichte Montage der Leuchte ermöglicht. Das Befestigungsprofil 40 wird mit einer Wand, Nischenwand, einem Bord, einer Wange, einem Oberschrank etc. verbunden, vorzugsweise verschraubt.

Das Flügelprofil 20 weist einen spitz zulaufenden Endbereich und einen davon beabstandeten konvexen, teilkreisförmigen Endbereich auf. Sowohl die Außenseite 21 als auch die Innenseite des Flügelprofils 20 sind konvex ausgeführt und geben dem Flügelprofil ein Querschnittsprofil ähnlich dem eines Flugzeugflügels.

Aus Fig. 18 ergibt sich ferner, dass das Flügelprofil 20 eine Abdeckung 110 aufweist, die im Gegensatz zu der Außenseite 21 transparent ist. Eine entsprechende Abdeckung befindet sich auf dem anderen Endbereich des Flügelprofils 20.

Das Gehäuse ist ebenfalls mit einer Abdeckung 120 versehen, die als Kunststoff- oder Metallteil ausgeführt ist und vorzugsweise dieselbe Farbe aufweist, wie das Gehäuse 10.

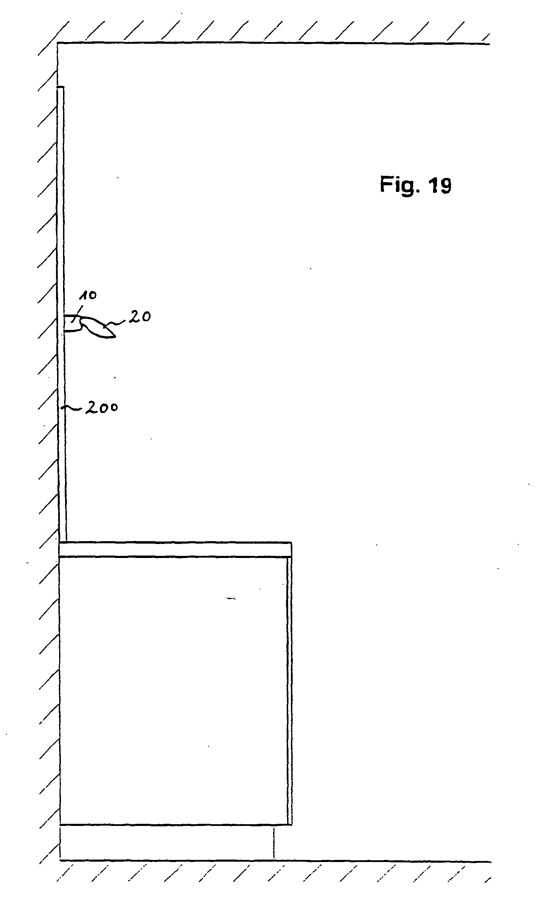

Die Figuren 19 bis 32 zeigen unterschiedliche Anordnungsmöglichkeiten der erfindungsgemäßen Leuchte. Figur 19 zeigt die Anordnung der Leuchte an einer Nischenwand 200 mit Flügelprofil 20, das derart angeordnet ist, das sich das Flügelprofil 20 im eingeschwenkten Zustand in einem Bereich unterhalb des Gehäuses erstreckt.

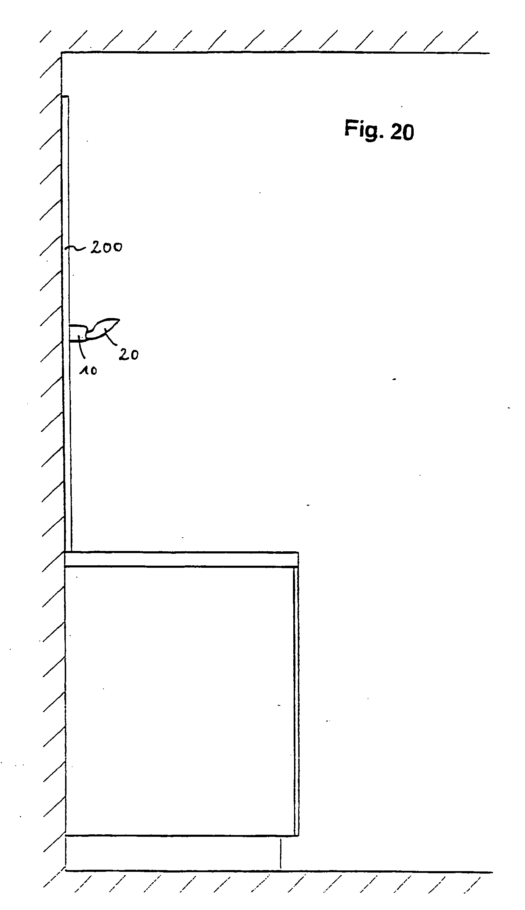

Figur 20 zeigt die Darstellung gemäß Figur 19 mit um 180° gedrehter Leuchte, die als Deckenfluter dient. Wird bei dieser Ausführungsform das Flügelprofil 20 an die Nischenwand geschwenkt, befindet erstreckt sich das Profil 20 in einem Bereich oberhalb des Gehäuses 10.

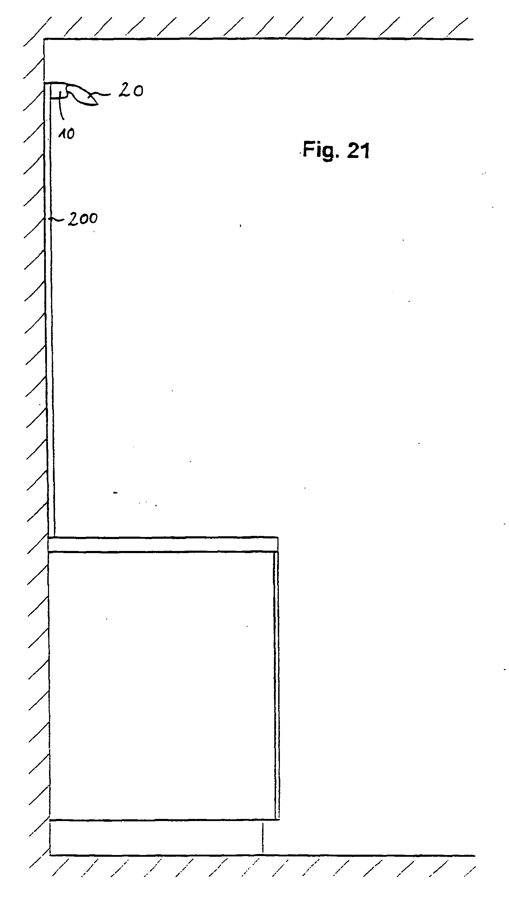

Figur 21 zeigt die erfindungsgemäße Leuchte in einer Orientierung gemäß Fig. 19 im oberen Endbereich der Nischenwand 200.

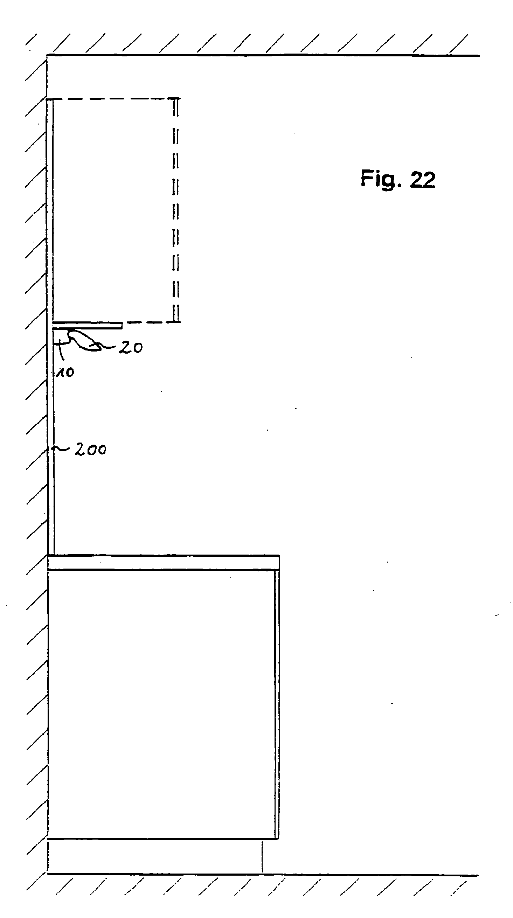

Figur 22 zeigt die erfindungsgemäße Leuchte in einer Orientierung gemäß Fig. 19 auf der Unterseite eines Bordes bzw. Oberschrankes.

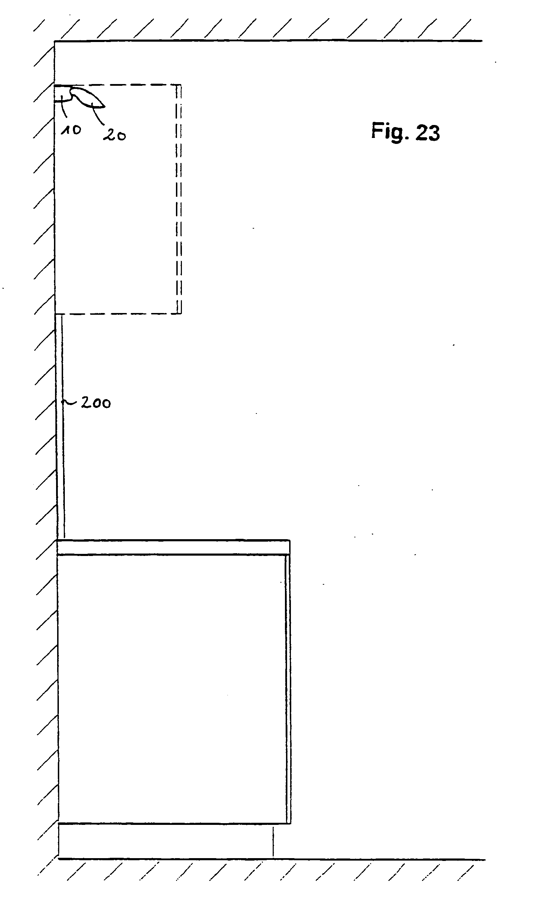

Figur 23 zeigt die Leuchte in einer Orientierung gemäß Fig. 19 in einem Oberschrank. Die Leuchte dient hierbei dementsprechend als Innenraumbeleuchtung.

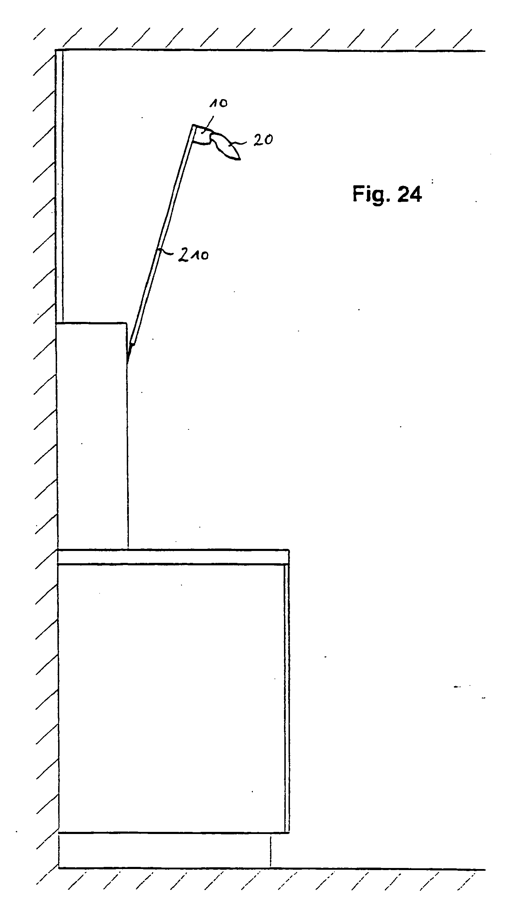

Aus Figur 24 ergibt sich eine Ausführungsform, bei der die Leuchte in einer Orientierung gemäß Fig. 19 an einem Träger 210 befestigt ist, der fest oder verschwenkbar an einer Nischenbox angeordnet sein kann.

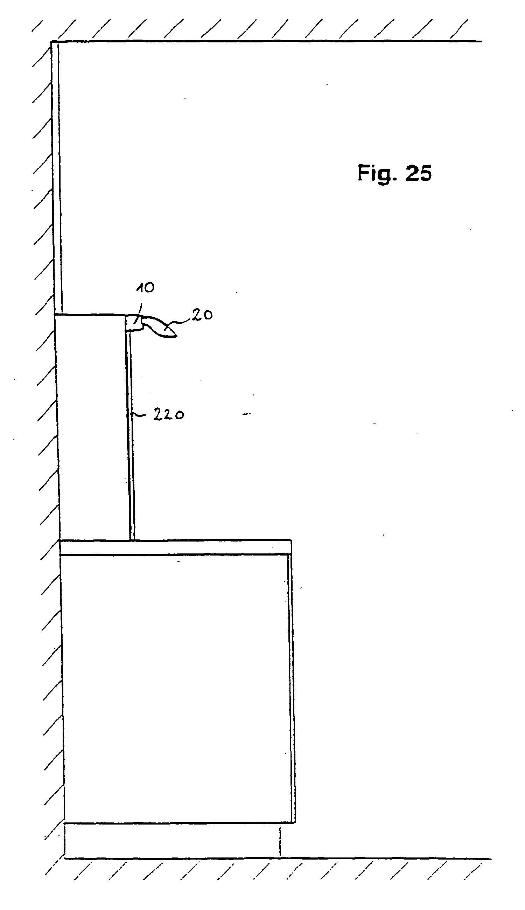

Figur 25 zeigt die erfindungsgemäße Leuchte in einer Orientierung gemäß Fig. 19 im oberen Endbereich eines vertikalen Stützelementes 220.

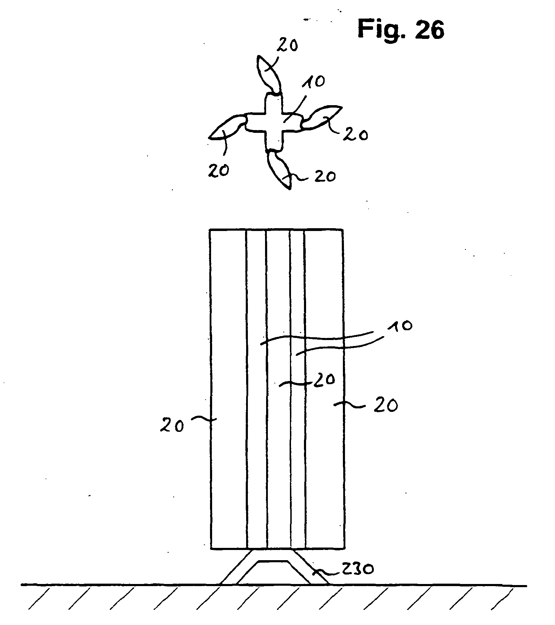

Aus Figur 26 ergibt sich, dass mit einem Gehäuse 10 auch mehrere Flügelprofile 20, im vorliegenden Ausführungsbeispiel vier Flügelprofile, kombiniert werden können, so dass sich eine mittels des Fußes 230 auf dem Boden zu plazierende Stehlampe ergibt. Die Flügelprofile 20 sind derart angeordnet, dass die Innenseite eines Flügelprofils zu der Außenseite des benachbarten Flügelprofils weist.

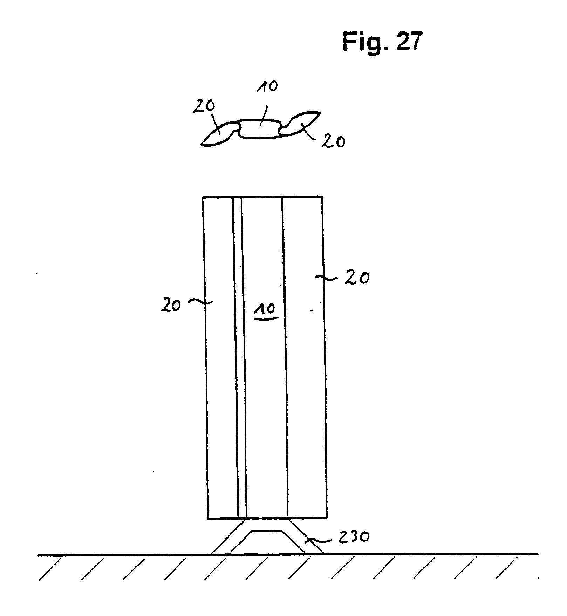

Figur 27 zeigt eine Fig. 26 im Prinzip entsprechende Stehlampe mit einem Gehäuse 10 mit zwei daran angeordneten Flügelprofilen 20.

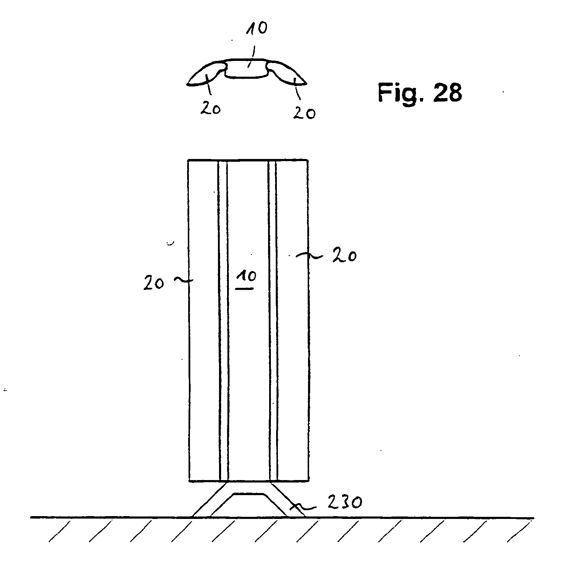

Figur 28 zeigt eine entsprechende Ausführung mit Flügelprofilen 20, deren Innenseiten im ausgeschwenkten Zustand in dieselbe Richtung weisen und aufeinander zu bewegt werden können.

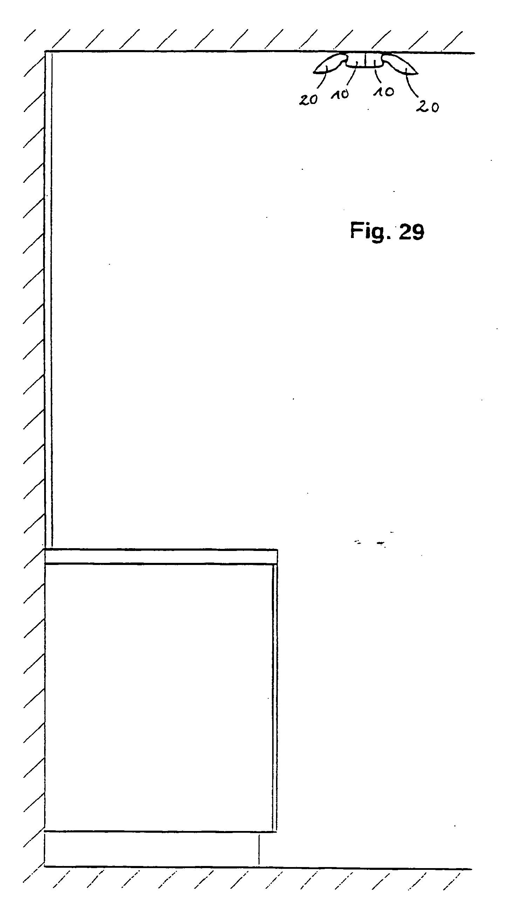

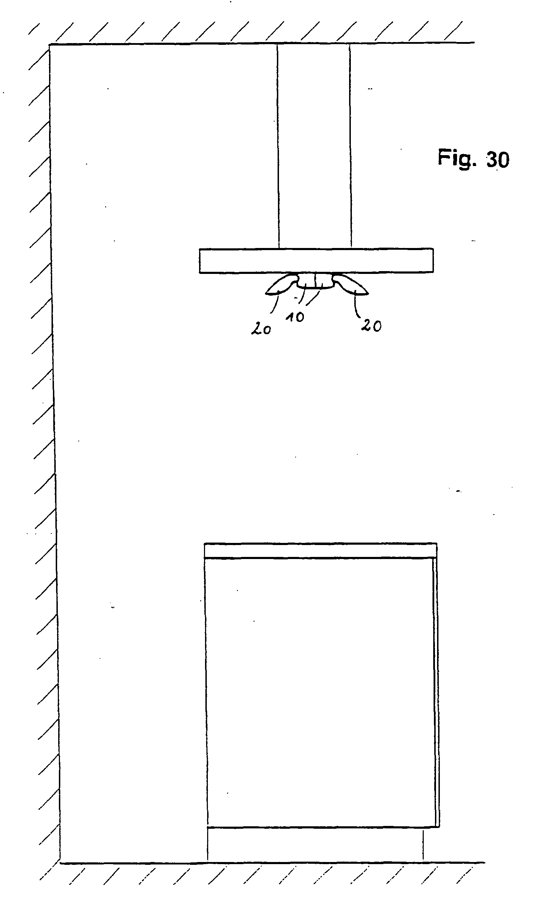

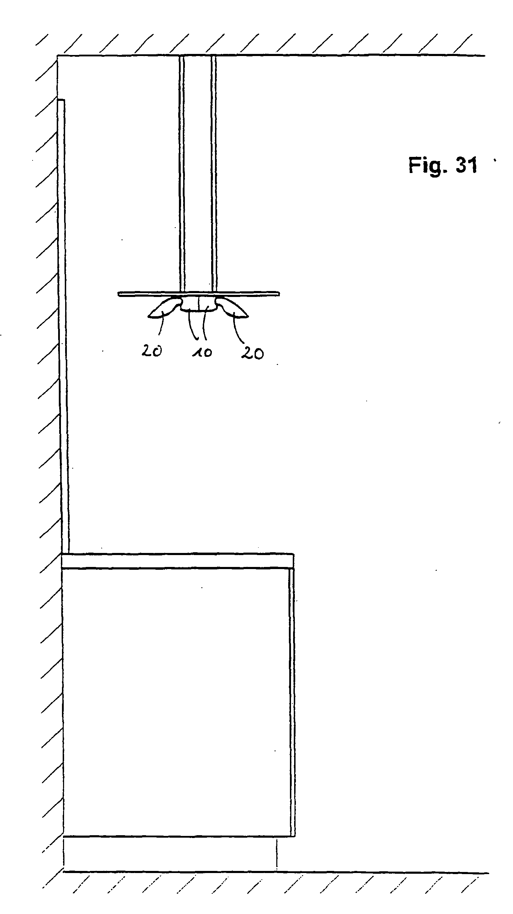

Aus Figur 29 ergibt sich eine Anordnung der Flügelprofile gemäß Fig. 28, bei der die Leuchte als Kombination aus zwei Leuchten an einer Decke oder gemäß Figur 30 an einer Dunstabzugshaube oder gemäß Figur 31 an einem beliebigen Träger angeordnet werden kann, der an der Decke befestigt ist.

Auch die Anordnung der Leuchtmittel zur Decke hin ist möglich. Die Leuchte dient in diesem Fall als Deckenfluter.

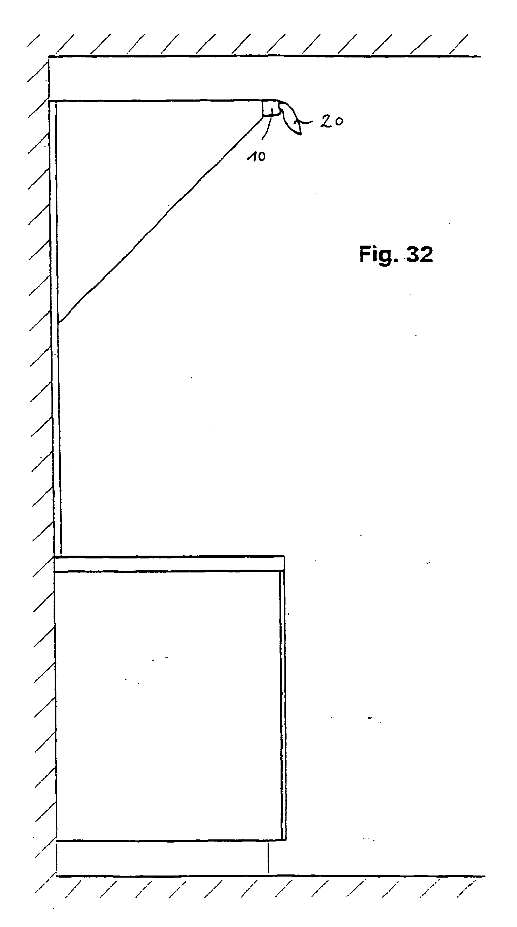

Figur 32 zeigt die erfindungsgemäße Leuchte schließlich im Frontbereich einer Dunstabzugshaube.

Ergänzend ist darauf hinzuweisen, dass die erfindungsgemäße Leuchte mit einem Schaltelement versehen sein kann, wobei das Flügelprofil selbst als Schalter für die Ein- bzw. Ausschaltung des Lichts dienen kann, bzw. als Sicherheitsschaltung in Endstellung um zu große Wärmestrahlung beispielsweise auf die Nischenrückwand zu vermeiden. Die Oberfläche des Flügelprofils kann Außen glatt oder strukturiert sein, z. B. auch mit Längsrippen oder Längsrillen versehen sein. Die Innenseite des Flügelprofils ist vorzugsweise in Teilbereichten hochglanzpoliert, so dass diese Fläche die Aufgabe eines Reflektors übernimmt.

Die erfindungsgemäße Leuchte ist für unterschiedliche Anwendungsmöglichkeiten konzipiert und eignet sich dementsprechend als Bestandteil eines Baukastenkonzepts.

## Patentansprüche

1. Leuchte, insbesondere Küchenleuchte, mit einem feststehenden Basisteil (10), mit wenigstens einem mit dem Basisteil (10) in Verbindung stehenden Profil (20), das schwenkbar an dem Basisteil (10) befestigt ist, sowie mit wenigstens einem Leuchtmittel (30), das in oder an dem Basisteil (10) oder in oder an dem Profil (20) angeordnet ist,
**dadurch gekennzeichnet,**
**dass** die Oberseite des Basisteils (10) sowie die Oberseite des Profils (20) im wesentlichen miteinander fluchten und dass das Profil (20) in seinem Querschnitt dem einer Tragfläche eines Flugzeugs angenähert ist,
**dass** das Basisteil (10) an seiner zu dem Profil (20) gewandten Seite konkav ausgeführt ist und dass das Profil (20) an seiner zu dem Basisteil (10) gewandten Seite konvex ausgeführt ist, wobei die konvexe Seite des Profils (20) in den konkaven Bereich des Basisteils (10) eingreift.

2. Leuchte nach Anspruch 1, **dadurch gekennzeichnet, dass** das Basisteil (10) langgestreckt ist und dass sich das Profil (20) in Längsrichtung des Basisteils (10) erstreckt.

3. Leuchte nach Anspruch 2, **dadurch gekennzeichnet, dass** das Basisteil (10) und das Profil (20) im wesentlichen die selbe Länge aufweisen.

4. Leuchte nach Anspruch 2 oder 3, **dadurch gekennzeichnet, dass** die Schwenkachse des Profils (20) parallel zur Längsrichtung des Basisteils (10) verläuft.

5. Leuchte nach einem der vorhergehenden Ansprüche, **dadurch gekennzeichnet, dass** das Profil (20) gegenüber dem Basisteil (10) stufenlos verstellbar oder in Vorzugsstellungen arretierbar ist.

6. Leuchte nach Anspruch 5, **dadurch gekennzeichnet, dass** ein Rastelement (60) vorgesehen ist, das auf seiner Oberseite Einwölbungen oder Einkerbungen (62) aufweist und dass ein Rastvorsprung (50) vorgesehen ist, der in die Einwölbungen oder Einkerbungen (62) eingreift.

7. Leuchte nach einem der vorhergehenden Ansprüche, **dadurch gekennzeichnet, dass** das Rastelement und/oder der Rastvorsprung (50) elastisch ausgeführt sind.

8. Leuchte nach Anspruch 6 oder 7, **dadurch gekennzeichnet, dass** der Rastvorsprung (50) an einem Endbereich des Profils (20) angeordnet ist oder durch diese gebildet wird.

9. Leuchte nach einem der vorhergehenden Ansprüche, **dadurch gekennzeichnet, dass** das Profil (20) eine Lagerbuchse aufweist, die gegenüber einem Lager des Basisteils drehbar ist.

10. Leuchte nach Anspruch 9, **dadurch gekennzeichnet, dass** das Lager durch eine Schraube oder einen Zapfen (90) gebildet wird.

11. Leuchte nach einem der vorhergehenden Ansprüche, **dadurch gekennzeichnet, dass** die elektrischen Bauelemente der Leuchte in dem Basisteil (10) angeordnet sind.

12. Leuchte nach einem der vorhergehenden Ansprüche, **dadurch gekennzeichnet, dass** ein Befestigungsprofil(40) vorgesehen ist, mit dem das Basisteil (10) zum Zwecke der Montage der Leuchte verbindbar ist.

13. Leuchte nach einem der vorhergehenden Ansprüche, **dadurch gekennzeichnet, dass** das Profil (20) auf seiner Innenseite wenigstens teilweise hochglanzpoliert ist.

14. Leuchte nach einem der vorhergehenden Ansprüche, **dadurch gekennzeichnet, dass** das Profil (20) und/oder das Basisteil (10) eine transparente Abdekkung (70) des die Leuchte aufnehmenden Bereichs aufweist.

## Claims

1. Luminaire, particularly a kitchen luminaire, having a fixed base part (10), at least one profile (20) communicating with the base part (10), which is pivotably attached to the base part (10), and at least one bulb or lamp (30) which is arranged within or at the base part (10) or within or at the profile (20),
**characterised in that**
the upper face of the base part (10) as well as the upper face of the profile (20) are substantially aligned with each other and **in that** the profile (20) in its cross-section approximates the aerofoil of an aeroplane,
**in that** the base part (10), on its face opposite the profile (20), is realised in a concave shape and **in that** the profile (20), on its face opposite the base part (10), is realised in a convex shape, wherein the convex face of the profile (20) engages in the concave portion of the base part (10).

2. Luminaire according to claim 1, **characterised in that** the base part (10) has a longitudinal shape and that the profile (20) extends in the longitudinal direction of the base part (10).

3. Luminaire according to claim 2, **characterised in that** the base part (10) and the profile (20) substantially have the same length.

4. Luminaire according to claim 2 or 3, **characterised in that** the pivot axis of the profile (20) extends in parallel to the longitudinal direction of the base part (10).

5. Luminaire according to any one of the preceding claims, **characterised in that** the profile (20) is continuously adjustable with respect to the base part (10) or is lockable in a preferred position.

6. Luminaire according to claim 5, **characterised in that** a detent element (60) is provided which has vault-like dents or notches (62) on its upper face and **in that** a detent projection (50) is provided which engages in the vault-like dents or notches (62).

7. Luminaire according to any one of the preceding claims, **characterised in that** the detent element and/or the detent projection (50) is realised in an elastic manner.

8. Luminaire according to claim 6 or 7, **characterised in that** the detent projection (50) is arranged at an end portion of the profile (20) or is formed by the same.

9. Luminaire according to any one of the preceding claims, **characterised in that** the profile (20) comprises a bearing sleeve which is rotable with respect to the base part (10).

10. Luminaire according to claim 9, **characterised in that** the bearing is formed by a screw or a journal (90).

11. Luminaire according to any one of the preceding claims, **characterised in that** the electric components of the luminaire are arranged within the base part (10).

12. Luminaire according to any one of the preceding claims, **characterised in that** a mounting profile (40) is provided to which, for the purpose of mounting the luminaire, the base part (10) is connectable.

13. Luminaire according to any one of the preceding claims, **characterised in that** the profile (20) is at least partly mirror-finished on its inner face.

14. Luminaire according to any one of the preceding claims, **characterised in that** the profile (20) and/or the base part (10) comprises a transparent cover (70) of the portion accommodating the luminaire.

## Revendications

1. Luminaire, en particulier lampe de cuisine, avec un élément de base (10) fixe, avec au moins un profilé (20), qui est relié à l'élément de base (10) et est fixé de manière pivotante à l'élément de base (10), ainsi qu'avec au moins un moyen d'éclairage (30), qui est monté dans ou sur l'élément de base (10) ou dans ou sur le profilé (20),
**caractérisé**
**en ce que** le côté supérieur de l'élément de base (10), ainsi que le côté supérieur du profilé (20) sont sensiblement alignés l'un à l'autre et en ce que le profilé (20) a une section qui est similaire à celle d'une aile d'un avion,
**en ce que** l'élément de base (10), sur son côté orienté vers le profilé (20), est réalisé avec une forme concave et que le profilé (20), sur son côté orienté vers l'élément de base (10), est réalisé avec une forme convexe, le côté convexe du profilé (20) s'emboîtant dans la zone concave de l'élément de base (10).

2. Luminaire selon la revendication 1, **caractérisé en ce que** l'élément de base (10) est allongé et le profilé (20) s'étend dans la direction longitudinale de l'élément de base (10).

3. Luminaire selon la revendication 2, **caractérisé en ce que** l'élément de base (10) et le profilé (20) ont sensiblement la même longueur.

4. Luminaire selon la revendication 2 ou 3, **caractérisé en ce que** l'axe de pivotement du profilé (20) s'étend dans la direction longitudinale de l'élément de base (10).

5. Luminaire selon l'une quelconque des revendications précédentes, **caractérisé en ce que** le profilé (20) peut être réglé en continu par rapport à l'élément de base (10) ou peut être immobilisé dans des positions préférées.

6. Luminaire selon la revendication 5, **caractérisé en ce qu'**il est prévu un élément de blocage (60), dont la face supérieure comporte des creux ou gorges (62), et **en ce qu'**il est prévu une saillie de blocage (50) qui s'engage dans les creux ou gorges (62).

7. Luminaire selon l'une quelconque des revendications précédentes, **caractérisé en ce que** l'élément de blocage et/ou la saillie de blocage (50) sont élastiques.

8. Luminaire selon la revendication 6 ou 7, **caractérisé en ce que** la saillie de blocage (50) est disposée sur une zone d'extrémité du profilé (20) ou est formée par celle-ci.

9. Luminaire selon l'une quelconque des revendications précédentes, **caractérisé en ce que** le profilé (20) comporte un coussinet, qui est apte tourner par rapport à un palier de l'élément de base.

10. Luminaire selon la revendication 9, **caractérisé en ce que** le palier est formé par une vis ou un tourillon (90).

11. Luminaire selon l'une quelconque des revendications précédentes, **caractérisé en ce que** les éléments électriques du luminaire sont montés dans l'élément de base (10).

12. Luminaire selon l'une quelconque des revendications précédentes, **caractérisé en ce qu'**il est prévu un profilé de fixation (40), auquel l'élément de base (10) peut être assemblé en vue du montage du luminaire.

13. Luminaire selon l'une quelconque des revendications précédentes, **caractérisé en ce que** la face intérieure du profilé (20) est au moins partiellement polie miroir.

14. Luminaire selon l'une quelconque des revendications précédentes, **caractérisé en ce que** le profilé (20) et/ou l'élément de base (10) comportent un couvercle (70) transparent, qui recouvre la zone recevant la lampe.
